# EUROPEAN PATENT SPECIFICATION

(11) **EP 0 667 503 B1**
(45) Date of publication and mention of the grant of the patent: **09.06.1999**
(21) Application number: 95102052.8
(22) Date of filing: 15.02.1995
(51) Int. Cl.: F25D 3/11, A23L 3/36, A23L 3/375

(54) **Tunnel freezer**
Gefriertunnel
Tunnel de congélation

(30) Priority: 15.02.1994 GB 9402840
(43) Date of publication of application: 16.08.1995
(73) Proprietor: AIR PRODUCTS AND CHEMICALS, INC., Allentown, PA 18195-1501 (US)
(72) Inventor: Miller, Jeremy Paul, Nr. Reading RG7 3SL, Berkshire (GB)
(74) Representative: Lucas, Brian Ronald

(56) References cited:
- EP-A- 0 159 858
- DE-A- 2 701 120
- US-A- 4 075 869
- US-A- 4 276 753
- US-A- 4 955 206

## Description

### FIELD OF THE INVENTION

This invention relates to a tunnel freezer.

### BACKGROUND OF THE INVENTION

In our European Patent Application EP-A-0 583 692, published on 23.02.94, we describe three tunnel freezers with different control systems for helping to ensure that nitrogen introduced into a tunnel freezer does not escape into the workplace via the product inlet and/or outlet. US-A-4 955 206 discloses a tunnel freezer comprising an elongate tunnel having a product inlet and a product outlet, a conveyor for transporting product through said elongate tunnel, an exhaust duct for venting fluid from said elongate tunnel, a fan for extracting cryogenic fluid through said exhaust duct, at least one nozzle for introducing cryogenic fluid into said elongate tunnel, and a sensor for measuring a control parameter. The elongate tunnel is provided with a number of turbulence inducing fans which are spaced along the elongate tunnel and one of which is provided with a pair of dampers which can be inclined to direct the flow of cryogenic vapour leaving the turbulence inducing fan towards or away from the product inlet in response to a signal from a sensor disposed adjacent the product inlet. By inclining the dampers in response to signals received from the sensor the amount of cryogenic vapour entering the workplace surrounding the tunnel freezer via the product inlet and/or product outlet can be controlled to some extent.

US-A-4 075 869 discloses an inclined cryogenic gas jet close to the product outlet. There is no indication that a sensor is used the control the angle of inclination if this nozzle.

### SUMMARY OF THE INVENTION

The present invention is directed to a tunnel freezer with a different arrangement which may be used in isolation or in combination with other control systems.

According to the present invention there is provided a tunnel freezer comprising an elongate tunnel having a product inlet and a product outlet, a conveyor for transporting product through said elongate tunnel, an exhaust duct for venting cryogenic fluid from said elongate tunnel, a fan for extracting cryogenic fluid through said exhaust duct, at least one nozzle for introducing cryogenic liquid into said elongate tunnel, and a sensor for measuring a control parameter, characterized in that said tunnel freezer further comprises means for adjusting the angle of inclination of said nozzle in response to signals from said sensor to help ensure that the cryogenic vapour in the tunnel freezer does not escape into the workplace via the product inlet and/or outlet and inhibit air from the workplace entering the tunnel freezer via the product inlet and/or outlet.

Preferably, said sensor is disposed inside said elongate tunnel in the vicinity of said product outlet.

Preferably, said sensor, in use, generates a signal indicative of the concentration of oxygen in said vicinity. Alternatively, the sensor could conceivably comprise a temperature sensor disposed adjacent said product outlet inside or outside said tunnel.

In conventional tunnel freezers fans are provided between said nozzle(s) and the exhaust duct. Such fans include turbulence inducing fans which serve to stir the cryogenic fluid to enhance heat transfer with the product being frozen and gas transfer fans to move the cryogenic fluid towards the exhaust duct. By suitably inclining the nozzle(s) of the present invention the gas transfer fans could conceivably be dispensed with although this is not recommended.

In one embodiment the tunnel freezer includes a first temperature sensor in said elongate tunnel, a second temperature sensor in said exhaust duct, a control unit, a valve for controlling the flow of cryogenic fluid to said at least one nozzle as a function of the temperature sensed by said first temperature sensor, and wherein said fan is controlled, in use, as a function of the difference in temperature between said first temperature sensor and said second temperature sensor.

Preferably, this tunnel freezer includes a safety sensor adjacent said product inlet and an override control to increase the extraction rate of said fan when said safety sensor is actuated.

In another embodiment the tunnel freezer includes a first temperature sensor in said elongate tunnel, a valve for controlling the flow of cryogenic fluid to said at least one nozzle as a function of the temperature sensed by said first temperature sensor, and wherein said fan is controlled, in use, as a function of the temperature sensed by said first temperature sensor.

In a further embodiment the tunnel freezer includes a first temperature sensor in said elongate tunnel, a valve for controlling the flow of cryogenic fluid to said at least one nozzle as a function of the temperature sensed by said first temperature sensor, a gas sensor for sensing the concentration of gas in said exhaust duct and means responsive to said gas sensor to control the flow of vapour through said exhaust duct.

Normally, a single nozzle will be insufficient for most tunnel freezers and a multiplicity of nozzles will be used each of which can be inclined as required. If desired, the inclination of each nozzle could be individually adjustable. However, for practical purposes several nozzles will be provided on a single spray bar which can be rotated as required. If desired, several spray bars may be provided each of which may be individually inclinable or which may be connected together. In a simple embodiment a nozzle may simply comprise a hole and/or slot in a spray bar.

For a better understanding of the present invention reference will now be made, by way of example, to the accompanying drawings, in which:-

### BRIEF DESCRIPTION OF THE DRAWINGS

Figure 1 is a schematic vertical section through a first embodiment of a tunnel freezer in accordance with the invention;
Figure 2 is a schematic vertical section through a second embodiment of a tunnel freezer in accordance with the invention; and
Figure 3 is a schematic vertical section through a third embodiment of a tunnel freezer in accordance with the invention.

### DETAILED DESCRIPTION OF THE PREFERRED EMBODIMENTS

In the accompanying drawings, the same reference numerals have been used to identify parts having similar functions in the various embodiments.

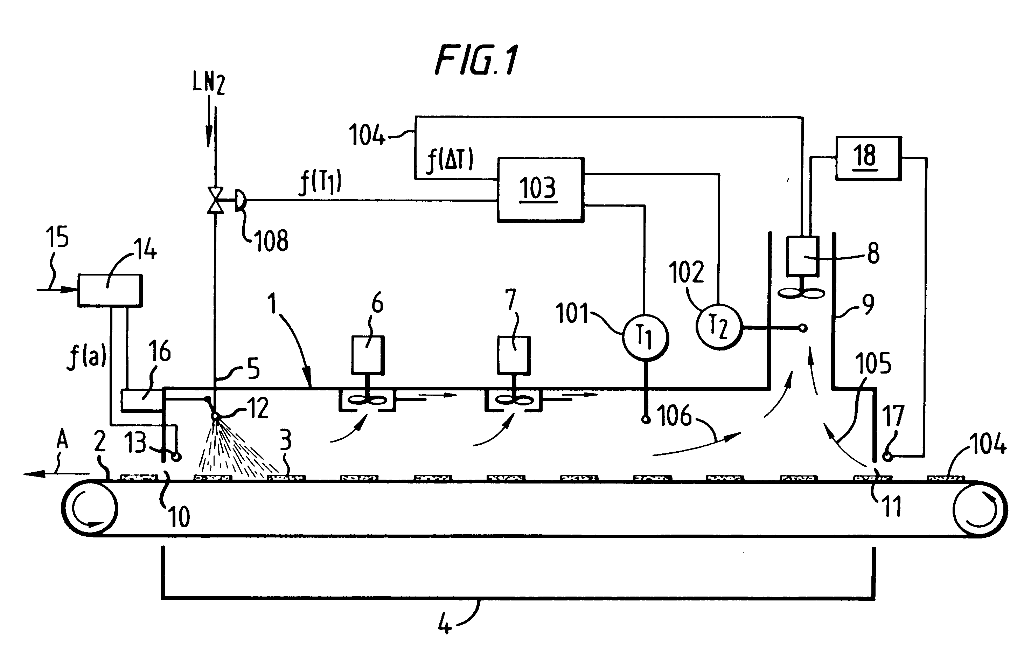

Referring to Figure 1, there is shown a tunnel freezer which is generally identified by reference numeral 1.

The tunnel freezer 1 comprises a conveyor 2 which carries hamburgers 3 (or other items to be frozen) in the direction of arrow A.

Liquid nitrogen is introduced into the tunnel 4 through a spray bar 12 via an inlet pipe 5 and heat transfer between the cold evaporating nitrogen and the hamburgers 3 is enhanced by turbulence inducing fans (not shown) which suck the cold evaporating nitrogen (which tends to settle in the bottom of the tunnel 4) upwardly and blow it horizontally. Gas transfer fans 6, 7 are provided to assist in transferring the cold nitrogen vapour towards an exhaust fan 8 which withdraws nitrogen vapour from the tunnel 4 and exhausts it through the roof of the factory via an exhaust duct 9.

The flow through the exhaust duct 9 is important. If it is too low then nitrogen will escape through the product inlet 11 and product outlet 10 at either end of the tunnel 4. A build-up of nitrogen in this area could result in asphyxiation of staff and is thus unacceptable. On the other hand, if the flow through the exhaust duct 9 is too high nitrogen will be wasted and, more importantly, air will enter the tunnel 4 through the product outlet 11 and product inlet 10. The moisture in this air will condense and freeze in the tunnel 4 and will continue to build up on the inside of the tunnel 4 and on the turbulence inducing fans, gas transfer fans 6 and 7 and exhaust fan 8 progressively impairing the efficiency of the tunnel 4.

In the control system shown in Fig. 1, a first temperature sensor 101 is located in the tunnel 4 and a second temperature sensor 102 is located in the exhaust duct 9. In operation, the signals from the two temperature sensors 101, 102 are compared in a control unit 103 and a signal 104 is generated which is a function of the difference between the temperatures at the two temperature sensors 101, 102. This signal 104 is then used to control the speed of the exhaust fan 8 in the exhaust duct 9. The object of the control system is to ensure that the difference in temperature between the two temperature sensors 101, 102 is maintained at a constant, predetermined level.

The underlying principle behind this control system is that in order to ensure that nitrogen does not escape into the workplace the exhaust fan 8 is operated so that there is a small steady flow of air 105 into the tunnel 4 through the opening 11. The air 105 mixes with nitrogen vapour 106 and the mixture passes up the exhaust duct 9 where the temperature of the mixture is sensed by second temperature sensor 102.

The temperature at the temperature sensor 101 is kept substantially constant by varying the supply of liquid nitrogen through inlet pipe 5 to the spray bar 12 through control valve 108 in accordance with the temperature sensed at temperature sensor 101. Accordingly, the difference in temperature between the temperature sensors 102 and 101 is considered a measure of the proportion of air passing through the opening 11.

When the ambient air and the hamburgers entering the tunnel freezer 1 are at the same temperature, or at similar temperatures this control system works quite acceptably.

The disadvantages of this arrangement are that the two temperature sensors 101, 102 (and particularly the temperature sensor 102) are sensitive to ice build-up. In addition problems arise if the product entering the tunnel 1 is hot. In particular, the flow of product to a freezing tunnel is rarely uniform. As a hot product, for example a hot hamburger 104 enters the tunnel 4 through opening 11 it heats the local atmosphere which is sucked up through exhaust duct 9 raising the temperature at temperature sensor 102. The control system interprets this influx of heat as indicating a high proportion of air and reacts by reducing the speed of the exhaust fan 8 in an attempt to lower the temperature at temperature sensor 102 and thus restore the preset temperature differential. It can clearly be seen that this response may result in excess nitrogen passing through product inlet 11 and product outlet 10 into the area surrounding the tunnel freezer 1.

The conventional solution to this problem is to run fan 8 at a slightly higher speed than required for steady state operation so that nitrogen does not enter the workplace during unsteady state loads. However, this is both wasteful of nitrogen and introduces moisture into the freezer.

In order to help reduce this problem a sensor 13 is disposed inside the tunnel 4 in the vicinity of the product outlet 10. The sensor 13 generates a signal which is indicative of the concentration of oxygen in the vicinity of the product outlet 10 and sends this to control unit 14. The control unit 14 compares the signal from the sensor 13 with a control signal on line 15 and generates a signal in dependence on the difference between the control signal and the signal from sensor 13 which is used to displace actuator 16 which rotates spray bar 12.

As the spray bar 12 rotates anti-clockwise as viewed in Figure 1, a greater proportion of the spray is directed towards the product inlet 11. This has the effect of inhibiting atmosphere from the tunnel 4 passing through the product outlet 10.

The control unit 14 positions the spray bar 12 so that a small amount of oxygen is detected by sensor 13. This implies that there is a small flow of air into the tunnel 4 via the product outlet 10 which ensures that nitrogen is not escaping into the atmosphere via product outlet 10.

Whilst this arrangement does not prevent nitrogen escaping into the workplace via product inlet 11 it should be borne in mind that this control system relies on a flow of air 105 passing through product inlet 11 and any nitrogen which passes from the tunnel 4 through product inlet 11 will be drawn back into the tunnel 4 when operation stabilizes. However, an oxygen sensor 17 should be placed downstream of the product inlet 11 and arranged to increment the speed of the exhaust fan 8 in proportion to any excess of nitrogen present via an override controller 18.

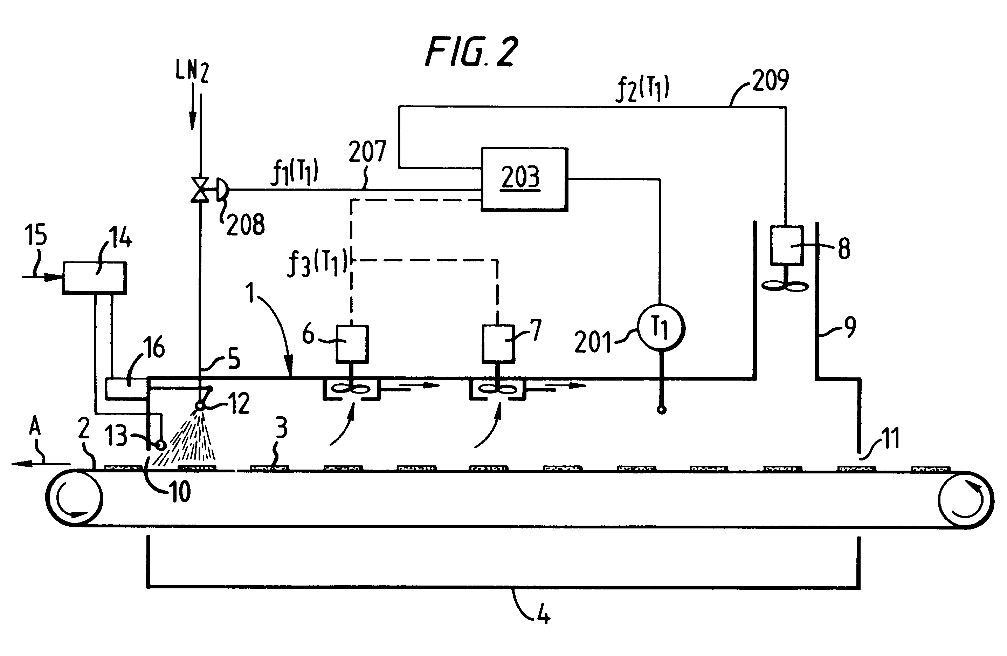

Turning now to the control system shown in Figure 2, the temperature at a temperature sensor 201 is measured and a signal transmitter to a control unit 203. A signal 207 is then sent to the control valve 208 to open or close the control valve 208 with a view to maintaining the temperature at the temperature sensor 201 substantially constant. At the same time a signal 209 is sent to exhaust fan 8 to vary the speed of the exhaust fan 8 as a function of the liquid nitrogen entering the tunnel freezer 1.

This arrangement also has disadvantages. In particular, in most commercial installations there is an appreciable length of insulated pipe between the source of liquid nitrogen and the spray bar. According to the consumption of liquid nitrogen the quality of the liquid nitrogen immediately upstream of the spray bar may vary from all liquid to nearly all vapour. However, the setting of the control valve 208 does not take into account the quality of the cryogen. Thus, the refrigeration for a given valve opening can differ substantially. However, the speed of the exhaust fan 8 is fixed for a given valve opening.

In a further refinement, shown in dotted lines, control unit 203 also regulates the speed of gas transfer fans 6 and 7 to blow the nitrogen from the spray bar 12 towards the exhaust duct 9.

Generally, the control unit 203 is programmed on the assumption that the nitrogen reaching the spray bar 12 is all liquid. Under these conditions there will be a small influx of air into the tunnel 4 via the product inlet 11 and product outlet 10. However, if the nitrogen reaching the spray bar 12 is largely gaseous there will be a substantial excess of air passing into the freezer 4 via product inlet 11 and product outlet 10.

By the use of oxygen sensor 13, control unit 14 and actuator 16 spray bar 12 can be rotated clockwise to inhibit the ingress of excess air through product outlet 10. This does not, of course, inhibit excess air entering the tunnel 4 through product inlet 11 although this is less of a problem as much of the air will immediately leave the tunnel 4 via the exhaust duct 9.

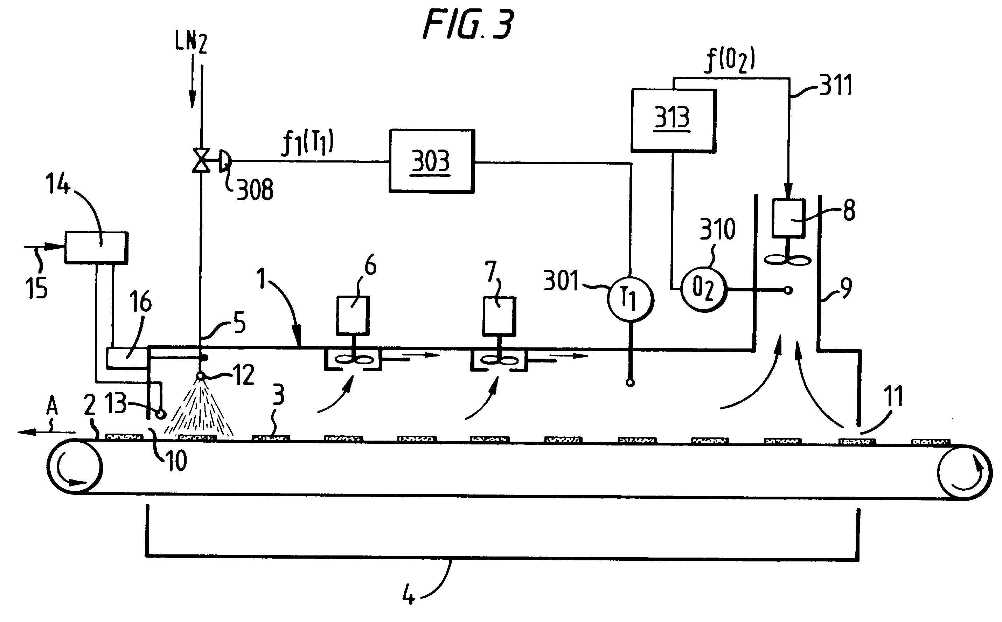

Turning now to Figure 3, an oxygen sensor is disposed in the exhaust duct 9 upstream of the exhaust fan 8. The signal from oxygen sensor 310 is transmitted to control unit 313 which generates a signal 311 which controls the exhaust fan 8 so that the concentration of oxygen at the oxygen sensor 310 is at a constant predetermined level.

The flow of liquid nitrogen to the tunnel freezer 1 is controlled in response to the temperature sensed by temperature sensor 301. In particular, the temperature sensor 301 generates a signal representative of the temperature at the temperature sensor 301. The signal is then sent to a control unit 303 which opens and closes control valve 308 with the aim of maintaining the temperature at temperature sensor 301 constant at a predetermined level.

In operation, it will be assumed that the tunnel freezer 1 is in equilibrium with a steady stream of liquid nitrogen being dispensed from the spray bar to maintain a steady temperature at temperature sensor 301. The exhaust fan 8 is operating at a steady speed and a small amount of air is being drawn in through product inlet 11 so that the concentration of oxygen at the oxygen sensor 310 is about 10.5% (by volume).

If extra hot hamburgers, or plates of pre-prepared meals are introduced into the tunnel 4 through opening 11 this has no effect on the exhaust fan 8 since the oxygen content at oxygen sensor 310 remains unaltered.

As the hot hamburgers pass temperature sensor 301 the temperature rises indicating an increased heat load. Control unit 303 opens valve 308 to admit more liquid nitrogen through the inlet pipe 5 to the spray bar. As the liquid nitrogen vaporizes it expands and has the effect of inhibiting the flow of air into the tunnel 4 through the product inlet 11. This causes the concentration of oxygen detected by oxygen sensor 310 to fall and control unit 313 to generate a signal 311 to increase the speed of exhaust fan 8 until sufficient air is sucked through product inlet 11 to return the concentration of oxygen at oxygen sensor 310 to its desired level.

If the heat load decreases the signal from temperature sensor 301 causes control unit 303 to close control valve 308. As the flow of liquid nitrogen through spray bar 12 decreases the volume of nitrogen travelling along the tunnel 4 decreases. As a consequence more air is sucked in through product inlet 11 and the concentration of oxygen at oxygen sensor 310 rises. The signal from oxygen sensor 310 is processed by control unit 313 which lowers the speed of the exhaust fan 8 until the oxygen concentration at oxygen sensor 310 returns to its desired level.

It will be noted that the speed of the exhaust fan 8 is independent of the setting of control valve 308 which reduces the problems associated with the arrangements shown in Figs. 1 and 2.

An oxygen sensor 13 is situated inside the tunnel 4 in the vicinity of the product outlet 10. The oxygen sensor 13 sends a signal to a control unit 14 which varies the inclination of spray bar 12 via actuator 16 to maintain the oxygen concentration at the oxygen sensor 13 at about 9% by volume. This indicates that there is a small flow into the tunnel 4 through the product outlet 10.

Various modifications to the embodiments described with reference to the Figures are envisaged. For example, whilst an oxygen sensor 13 is preferred, a nitrogen sensor could also be used.

Although the speed of the exhaust fan 8 is varied to control the flow through the exhaust duct 9 various alternatives are available, for example the pitch of the blades of the fan could be varied. Alternatively, the speed of the exhaust fan 8 could be kept constant and the effective diameter of the exhaust duct varied by, for example varying the setting of a butterfly valve or a variable shutter in the exhaust duct 9.

Although only one spray bar 12 is shown, the tunnel 4 could be provided with two or more spray bars each associated with actuator 16 so that the spray bars can be rotated in unison. Each spray bar 12 will typically be provided with a multiplicity of nozzles which may simply comprise holes. At its simplest the spray bar could comprise a single hole or slot.

## Claims

1. A tunnel freezer comprising an elongate tunnel (4) having a product inlet (11) and a product outlet (10), a conveyor (2) for transporting product (3) through said elongate tunnel (4), an exhaust duct (9) for venting cryogenic fluid from said elongate tunnel (4), a fan (8) for extracting cryogenic fluid through said exhaust duct (9), at least one nozzle (12) for introducing cryogenic liquid into said elongate tunnel (4), and a sensor (13) for measuring a control parameter, characterized in that said tunnel freezer further comprises means (16) for adjusting the angle of inclination of said nozzle (12) in response to signals from said sensor (13) to help ensure that the cryogenic vapour in the tunnel freezer does not escape into the workplace via the product inlet and/or outlet and inhibit air from the workplace entering the tunnel freezer via the product inlet and/or outlet.

2. A tunnel freezer as claimed in Claim 1, wherein said sensor (13) is disposed inside said elongate tunnel (4) in the vicinity of said product outlet (10).

3. A tunnel freezer as claimed in Claim 2, wherein said sensor (13), in use, generates a signal indicative of the concentration of oxygen in said vicinity.

4. A tunnel freezer as claimed in any preceding Claim, characterized in that it includes a first temperature sensor (101) in said elongate tunnel, a second temperature sensor (102) in said exhaust duct (9), a control unit (103), a valve (108) for controlling the flow of cryogenic fluid to said at least one nozzle (12) as a function of the temperature sensed by said first temperature sensor (101), and wherein said fan (8) is controlled, in use, as a function of the difference in temperature between said first temperature sensor (101) and said second temperature sensor (102).

5. A tunnel freezer as claimed in Claim 4, including a safety sensor (17) adjacent said product inlet (11) and an override control (18) to increase the extraction rate of said fan (8) when said safety sensor (17) is actuated.

6. A tunnel freezer as claimed in Claim 1, 2 or 3, including a first temperature sensor (201) in said elongate tunnel (4), a valve (208) for controlling the flow of cryogenic fluid to said at least one nozzle (12) as a function of the temperature sensed by said first temperature sensor (201), and wherein said fan (8) is controlled, in use, as a function of the temperature sensed by said first temperature sensor (201).

7. A tunnel freezer as claimed in Claim 1, 2 or 3, including a first temperature sensor (301) in said elongate tunnel, a valve (308) for controlling the flow of cryogenic fluid to said at least one nozzle (12) as a function of the temperature sensed by said first temperature sensor (301), a gas sensor (310) for sensing the concentration of gas in said exhaust duct (9) and means (313) responsive to said gas sensor (310) to control the flow of vapour through said exhaust duct (9).

8. A tunnel freezer as claimed in any preceding Claim, including a multiplicity of nozzles which can be inclined by said means.

9. A tunnel freezer as claimed in Claim 8, wherein at least some of said nozzles are on a single spray bar.

10. A tunnel freezer as claimed in Claim 9, wherein at least some of said nozzles are formed by holes and/or slots in said spray bar.

## Patentansprüche

1. Gefriertunnel, der einen länglichen Tunnel (4) mit einem Produkteinlaß (11) und einem Produktauslaß (10), eine Fördereinrichtung (2) zum Transportieren des Produktes (3) durch besagten länglichen Tunnel (4), eine Abgasleitung (9) zum Belüften der kryogenischen Flüssigkeit aus besagtem länglichen Tunnel (4), einen Ventilator (8) zum Abziehen der kryogenischen Flüssigkeit durch besagte Abgasleitung (9), wenigstens eine Düse (12) zum Einführen der kryogenischen Flüssigkeit in besagten länglichen Tunnel (4) und einen Sensor (13) zum Messen eines Kontrollparameters umfaßt, dadurch gekennzeichnet, daß besagter Gefriertunnel weiterhin Mittel (16) zum Regeln des Neigungswinkels besagter Düse (12) als Reaktion auf die Signale von besagtem Sensor (13) umfaßt, um sicherzustellen, daß der kryogenische Dampf in dem Gefriertunnel nicht in den Arbeitsplatz über den Produkteinlaß und/oder -auslaß entweicht, und zu verhindern, daß Luft vom Arbeitsplatz in den Gefriertunnel über das Produkt eindringt.

2. Gefriertunnel gemäß Anspruch 1, dadurch gekennzeichnet, daß besagter Sensor (13) in besagtem länglichen Tunnel (4) in der Umgebung des besagten Produktauslasses (10) angeordnet ist.

3. Gefriertunnel gemäß Anspruch 2, dadurch gekennzeichnet, daß besagter Sensor (13) im Betrieb ein Signal erzeugt, das die Konzentration des Sauerstoffs in besagter Umgebung anzeigt.

4. Gefriertunnel gemäß jedem der vorstehenden Ansprüche, dadurch gekennzeichnet, daß er einen ersten Temperatursensor (101) in besagtem länglichen Tunnel, einen zweiten Temperatursensor (102) in besagter Abgasleitung (9), eine Regeleinheit (103), ein Ventil (108) zum Regeln des Flusses der kryogenischen Flüssigkeit zu besagter wenigstens einer Düse (12) als Funktion der Temperatur, die durch besagten ersten Temperatursensor (101) gemessen wird, einschließt und in dem besagter Ventilator (8) im Betrieb als Funktion der Differenz der Temperatur zwischen besagtem ersten Temperatursensor (101) und besagtem zweiten Temperatursensor (102) geregelt wird.

5. Gefriertunnel gemäß Anspruch 4, dadurch gekennzeichnet, daß er einen Sicherheitssensor (17), der an besagten Produkteinlaß angrenzt, und eine Grenzwertkontrolle (18) einschließt, um die Abziehgeschwindigkeit von besagtem Ventilator (8) zu erhöhen, wenn besagter Sicherheitssensor betätigt wird.

6. Gefriertunnel gemäß Anspruch 1, 2 oder 3, dadurch gekennzeichnet, er einen ersten Temperatursensor (201) in besagtem länglichen Tunnel (4), ein Ventil (208) zum Regeln des Flusses der kryogenischen Flüssigkeit zu besagter wenigstens einer Düse (12) als Funktion der Temperatur, die durch besagten ersten Temperatursensor (201) gemessen wird, einschließt und in dem besagter Ventilator (8) im Betrieb als Funktion der Temperatur geregelt wird, die durch besagten ersten Temperatursensor (201) gemessen wird.

7. Gefriertunnel gemäß Anspruch 1, 2 oder 3, dadurch gekennzeichnet, daß er einen ersten Temperatursensor (301) in besagtem länglichen Tunnel, ein Ventil (308) zum Regeln des Flusses der kryogenischen Flüssigkeit zu besagter wenigstens einer Düse (12) als Funktion der Temperatur, die durch besagten ersten Temperatursensor (301) gemessen wird, einen Gassensor (310) zum Messen der Konzentration des Gases in besagter Abgasleitung (9) und Mittel (313), die auf besagten Gassensor (310) reagieren, um den Fluß des Dampfes durch besagte Abgasleitung (9) zu regeln, einschließt.

8. Gefriertunnel gemäß jedem der vorstehenden Ansprüche, dadurch gekennzeichnet, daß er eine Vielzahl von Düsen einschließt, die durch besagte Mittel geneigt werden können.

9. Gefriertunnel gemäß Anspruch 8, dadurch gekennzeichnet, daß wenigstens einige der besagten Düsen auf einem Einzelsprühstab sind.

10. Gefriertunnel gemäß Anspruch 9, dadurch gekennzeichnet, daß wenigstens einige der besagten Düsen durch Löcher und/oder Schlitze in besagtem Sprühstab gebildet sind.

## Revendications

1. Un tunnel de congélation comprenant un tunnel allongé (4) ayant une entrée de produit (11) et une sortie de produit (10), un transporteur (2) pour transporter le produit (3) au travers dudit tunnel allongé (4), un conduit d'échappement (9) pour dégager du fluide cryogène à partir dudit tunnel allongé (4), un ventilateur (8) pour extraire du fluide cryogène au travers dudit conduit d'échappement (9), au moins une buse (12) pour introduire du liquide cryogène dans ledit tunnel allongé (4) et un capteur (13) pour mesurer un paramètre de commande, caractérisé en ce que ledit tunnel de congélation comprend, en outre, des moyens (16) pour régler l'angle d'inclinaison de ladite buse (12) en réponse à des signaux à partir dudit capteur (13) pour contribuer à assurer que la vapeur cryogène dans le tunnel de congélation ne s'échappe pas dans l'emplacement de travail par l'intermédiaire de l'entrée de produit et/ou de la sortie de produit et empêcher l'air à partir de l'emplacement de travail de pénétrer dans le tunnel de congélation par l'intermédiaire de l'entrée et/ou de la sortie de produit.

2. Un tunnel de congélation selon la revendication 1, dans lequel ledit capteur (13) est disposé à l'intérieur dudit tunnel allongé (4) au voisinage de ladite sortie de produit (10).

3. Un tunnel de congélation selon la revendication 2, dans lequel ledit capteur (13) en service génère un signal indiquant la concentration d'oxygène dans ledit voisinage.

4. Un tunnel de congélation selon l'une quelconque des revendications précédentes, caractérisé en ce qu'il comprend un premier capteur de température (101) dans ledit tunnel allongé, un deuxième capteur de température (102) dans ledit conduit d'échappement(9), une unité de commande (103), une soupape (108) pour réguler l'écoulement de fluide cryogène au moins à ladite buse (12) en fonction de la température détectée par ledit premier capteur de température (101) et dans lequel ledit ventilateur (8) est commandé, en service, en fonction de la différence de température entre ledit premier capteur de température (101) et ledit deuxième capteur de température (102).

5. Un tunnel de congélation selon la revendication 4, comprenant un capteur de sécurité (17) près de ladite entrée de produit (11) et une commande chevauchante (18) pour augmenter la vitesse d'extraction dudit ventilateur (8) lorsque ledit capteur de sécurité (17) est actionné.

6. Un tunnel de congélation selon la revendication 1,2 ou 3, comprenant un premier capteur de température (201) dans ledit tunnel allongé (4), une soupape (208) pour réguler l'écoulement de fluide cryogène au moins à ladite buse (12) en fonction de la température détectée par ledit premier capteur de température (201) et dans lequel ledit ventilateur (8) est commandé en service en fonction de la température détectée par ledit premier capteur de température (201).

7. Un tunnel de congélation selon la revendication 1,2 ou 3, comprenant un premier capteur de température (301) dans ledit tunnel allongé, une soupape (308) pour réguler l'écoulement de fluide cryogène au moins à ladite buse (12) en fonction de la température détectée par ledit premier capteur de température (301), un capteur de gaz (310) pour détecter la concentration de gaz dans ledit conduit d'échappement (9) et des moyens (313) réagissant audit capteur de gaz (310) pour réguler l'écoulement de vapeur au travers dudit conduit d'échappement (9).

8. Un tunnel de congélation selon l'une quelconque des revendications précédentes, comprenant une pluralité de buses qui peuvent être inclinées par lesdits moyens.

9. Un tunnel de congélation selon la revendication 8, dans lequel au moins certaines desdites buses sont sur une seule barre de pulvérisation.

10. Un tunnel de congélation selon la revendication 9, dans lequel au moins certaines desdites buses sont formées par des trous et/ou des fentes dans ladite barre de pulvérisation.
